# EUROPEAN PATENT APPLICATION

(11) **EP 4 734 601 A2**
(43) Date of publication of application: **29.04.2026**
(21) Application number: 26164771.3
(22) Date of filing: 28.01.2022
(51) Int. Cl.: H04W 28/02

(54) **5GS ASSISTED ADAPTIVE AI OR ML OPERATION**

(62) Divisional of application: 22922804.4
(71) Applicant: Lenovo (Beijing) Limited, Beijing 100085 (CN)
(72) Inventor: LUO, Haiyan, Beijing, 100085 (CN); Mingzeng, DAI, Beijing, 100085 (CN); TANG, Tingfang, Beijin, 100085 (CN); VELEV, Genadi, Beijing, 100085 (CN)
(74) Representative: Marks & Clerk LLP

(57) **Abstract**

Method and apparatus for 5GS assisted adaptive AI or ML operation are disclosed. In one embodiment, an SMF comprises a processor; and a transceiver coupled to the processor, wherein the processor is configured to: receive, via the transceiver, Policy and Charging Control (PCC) rules including a request for data rate monitoring, from a policy control function (PCF); transmit, via the transceiver, session management information that includes the request for data rate monitoring to a Next Generation Radio Access Network (NG-RAN) node; and configure a User Plane Function PDU Session Anchor (PSA UPF) to, upon receiving data rate monitoring results from the NG-RAN node, expose the data rate monitoring results to a first node.

## Description

### FIELD

The subject matter disclosed herein generally relates to wireless communications, and more particularly relates to 5GS assisted adaptive AI or ML operation.

### BACKGROUND

The following abbreviations are herewith defined, at least some of which are referred to within the following description: New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), User Equipment (UE), Evolved Node B (eNB), Next Generation Node B (gNB), Uplink (UL), Downlink (DL), Central Processing Unit (CPU), Graphics Processing Unit (GPU), Field Programmable Gate Array (FPGA), Orthogonal Frequency Division Multiplexing (OFDM), Radio Resource Control (RRC), User Entity/Equipment (UE), Mobile Terminal (MT), artificial intelligence (AI), machine learning (ML), convolutional neural network (CNN), Augmented Reality (AR), Virtual Reality (VR), frames per second (FPS), 5G Core (5GC), 5G system (5GS), Quality of Service (QoS), end to end (E2E), Technical Specification (TS), Technical Report (TR), Radio Access Network (RAN), The interface between the gNB and the 5G-CN (NG), Next Generation Radio Access Network (NG-RAN), Protocol Data Unit (PDU), modulation and coding (MCS), Channel State Information (CSI), UE route selection policy (URSP), Route Selection Descriptor (RSD), Non-Access Stratum (NAS), Session and Service Continuity (SSC), Single Network Slice Selection Assistance Information (S-NSSAI), data network (DN), Application Function (AF), Policy Control Function (PCF), Access and Mobility Management Function (AMF), QoS Flow ID (QFI), Network Exposure Function (NEF), Session Management Function (SMF), Policy and Charging Control (PCC), slice/service type (SST), Data Network Name (DNN), Public Land Mobile Network (PLMN), Information Element (IE), Centralized Unit (CU), Distributed Unit (DU), Protocol Data Unit (PDU).

AI/ML-based (which means AI-based or ML-based, where AI refers to artificial intelligence, and ML refers to machine learning) mobile applications are increasingly computation-intensive, memory-consuming and power-consuming. Meanwhile, end devices (e.g. UE) usually have stringent energy consumption, compute and memory limitations for running a complete offline AI/ML inference on-board. The intention of AI/ML operational splitting is to offload computation-intensive and energy-intensive training parts to network endpoints, whereas the privacy-sensitive and delay-sensitive training parts are left at the end device.

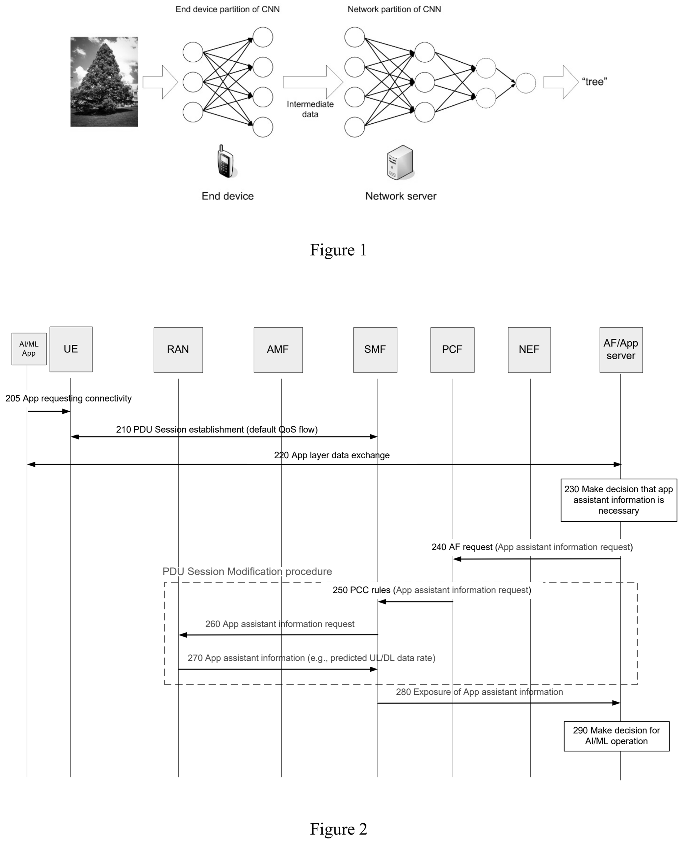

Convolutional neural network (CNN) models have been widely used for image and/or video recognition tasks on mobile devices, e.g. image classification, image segmentation, object localization and detection, face authentication, action recognition, enhanced photography, augmented reality (AR) and virtual reality (VR), video games. One example of AI/ML operation splitting for image recognition between UE (i.e., end device) and AI/ML application server (i.e., network server) is shown in Figure 1.

For AI/ML splitting operation, the device executes the inference up to a specific CNN layer and sends the intermediate data to the network server. The network server runs through the remaining CNN layers and sends the inference result back to the device. The intermediate data size transferred from UE to the AI/ML application server depends on the location of the split point. Assume that the 227x227 images from a video stream with 30 frames per second (FPS) need to be classified. With AlexNet model, the required (or requested) UL data rate for different split points ranges from 4.8 to 65 Mbit/s (listed in Table 1). Different AI/ML model has different UL data rate requirement based on different split points. With VGG-16 model, the required (or requested) UL data rate for different split points ranges 24 to 720 Mbit/s (listed in Table 2). In case of images with a higher resolution, higher data rates would be required.

| **Split point** | **Approximate output data size (MByte)** | **Required UL data rate (Mbit/s)** |
|---|---|---|
| Candidate split point 0 (Cloud-based inference) | 0.15 | 36 |
| Candidate split point 1 (after pool1 layer) | 0.27 | 65 |
| Candidate split point 2 (after pool2 layer) | 0.17 | 41 |
| Candidate split point 3 (after pool5 layer) | 0.02 | 4.8 |
| Candidate split point 4 (Device-based inference) | N/A | N/A |

**Table 1: Required UL data rate for different split points of AlexNet model for video recognition @30FPS**

| **Split point** | **Approximate output data size (MByte)** | **Required user experienced UL data rate (Mbit/s)** |
|---|---|---|
| Candidate split point 0 (Cloud-based inference) | 0.6 | 145 |
| Candidate split point 1 (after pool1 layer) | 3 | 720 |
| Candidate split point 2 (after pool2 layer) | 1.5 | 360 |
| Candidate split point 3 (after pool3 layer) | 0.8 | 192 |
| Candidate split point 4 (after pool4 layer) | 0.5 | 120 |
| Candidate split point 5 (after pool5 layer) | 0.1 | 24 |
| Candidate split point 6 (Device-based inference) | N/A | N/A |

| | | |
|---|---|---|
| Table 2: Required user experienced UL data rate for different split points of VGG-16 model @30FPS | | |

It can be seen that for AI/ML model splitting, the required UL data rate is related to the AI/ML model, model split point, image resolution and the frame rate for the image recognition. That is, awareness of UE UL data rate at AI/ML application server is beneficial for it to determine the AI/ML model and splitting point.

Image recognition is an area where a rich set of pre-trained AI/ML models are available. Due to the limited storage resource in device, the device needs to download the AI/ML model from the network before the image recognition task can start. The typical sizes of typical deep neural network models for image recognition are listed in Table 3.

**Table 3: Sizes of typical image-recognition models and required DL data rates for downloading in 1s.**

| **DNN (Deep Neural Network) model for image recognition** | **Number of parameters (Million)** | **32 bits per parameter** | | **8 bits per parameter** | |
|---|---|---|---|---|---|
| | | **Size of the model (MByte)** | **Required DL data rate (Mbit/s)** | **Size of the model (MByte)** | **Required DL data rate (Mbit/s)** |
| AlexNet [7] | 60 | 240 | 1920 | 60 | 480 |
| VGG16 [8] | 138 | 552 | 4416 | 138 | 1104 |
| ResNet-152 [18] | 60 | 240 | 1920 | 60 | 480 |
| ResNet-50 [18] | 25 | 100 | 800 | 25 | 200 |
| GoogleNet [9] | 6.8 | 27.2 | 217.6 | 6.8 | 54.4 |
| Inception-V3 [23] | 23 | 92 | 736 | 23 | 184 |
| 1.0 MobileNet-224 [19] | 4.2 | 16.8 | 134.4 | 4.2 | 33.6 |

As shown in Table 3, if the downloading latency is 1s, the required DL data rate ranges from 134.4 Mbps to 1.92Gbps in case of 32-bit parameters. In case of 8-bit parameters, the required DL data rate can be limited to 33.6Mbps-1.1Gbps.

It can be seen that, for AI/ML model downloading, the required DL data rate is related to the AI/ML model and the parameter quantify size. That is, awareness of UE DL data rate at AI/ML application server is beneficial for it to determine the AI/ML model for downloading.

The use cases and potential requirements for 5G system support AI/ML model distribution and transfer (download, upload, updates, etc.) have been described in TR 22.874. Three aspects of AI/ML service are included:
AI/ML operation splitting between AI/ML endpoints;
AI/ML model and/or data distribution and sharing over 5G system; and
Distributed and/or federated learning over 5G system.

The consolidated potential requirements in TR 22.874 stated that the 5G system shall be able to expose QoS information to an authorized 3rd party. The QoS information can include e.g., UE UL and/or DL bitrate, latency, reliability per location. In the work task of R18 SA2 AI/ML topic, it is stated that, 5GS information exposure extensions for 5GC NF(s) targets to expose UE and/or network conditions and performance prediction (e.g., location, QoS, load, congestion, etc.) and whether and how to expose such information to the UE and/or to the authorized 3rd party to assist the Application AI/ML operation.

It is assumed that AI/ML application server determines whether the UE should download the AI/ML model and perform inference by itself or AI/ML model split should be performed, and the inference results generated by the AI/ML application server should be feedback to the UE. So, the AI/ML Application server should be aware of UE UL and/or DL data rates. Meanwhile, if it is the application in UE determines the AI/ML operation, application in UE should be aware of UE UL and/or DL data rate.

In order to enable awareness of UE UL and/or DL data rates at AI/ML application server, 5GS would be triggered to provide UE UL and/or DL data rates (e.g. the supported UL and/or DL data rates, or the predicted UL and/or DL data rates), which can also be referred to as AI/ML assistant information.

The present disclosure aims at the above issues.

### BRIEF SUMMARY

Method and apparatus for 5GS assisted adaptive AI or ML operation are disclosed. Aspects of the present disclosure are defined by the appended independent claims. Preferred embodiments are defined by the dependent claims.

We also describe an SMF which comprises a processor; and a transceiver coupled to the processor, wherein the processor is configured to: receive, via the transceiver, app assistant information from a NG-RAN node, wherein the app assistant information includes at least one of predicted UL data rate of UE and predicted DL data rate of UE; and transmit, via the transceiver, the app assistant information to an AF.

The processor may be further configured to transmit, via the transceiver, an app assistant information request to the NG-RAN node. The app assistant information request may be constructed based on an app assistant information request obtained from another network entity, e.g. based on the app assistant information request included in PCC rules from PCF. The app assistant information request may alternatively be constructed based on determination that the app assistant information is necessary for an established PDU session or QoS flow, e.g. based on specific combination of at least one of 5QI, S-NSSAI, SST, DNN, and application identifier according to pre-configuration. The app assistant information request may further alternatively be constructed based on an app assistant information request received from UE. The app assistant information request may be contained in N2 SM information to be transmitted to the NG-RAN node via AMF.

The app assistant information request may include a request for UL/DL data rate, or a request for data rate monitoring. The request for data rate monitoring may include at least one of (1) type of monitoring, (2) reporting levels, (3) reporting periodicity, (4) reporting stop timer and (5) the required UL/DL data rate.

The app assistant information may be exposed directly to the AF or via NEF to the AF.

We also describe an AF which comprises a processor; and a transceiver coupled to the processor, wherein the processor is configured to: receive, via the transceiver, app assistant information from SMF, wherein the app assistant information includes at least one of predicted UL data rate of UE and predicted DL data rate of UE; and determine operation of a traffic at least based on the received app assistant information

The processor may be further configured to transmit, via the transceiver, an app assistant information request to SMF. For example, the app assistant information request is transmitted to PCF so as to be included in PCC rules to the SMF. The app assistant information request may include a request for UL/DL data rate, or a request for data rate monitoring. The request for data rate monitoring may include at least one of (1) type of monitoring, (2) reporting levels, (3) reporting periodicity, (4) reporting stop timer and (5) the required UL/DL data rate.

We also describe an NG-RAN node which comprises a processor; and a transceiver coupled to the processor, wherein the processor is configured to: receive, via the transceiver, an app assistant information request from SMF or UE; and transmit, via the transceiver, app assistant information to the SMF or UE, wherein the app assistant information includes at least one of predicted UL data rate of UE and predicted DL data rate of UE.

The app assistant information request may be received via AMF by being included in N2 SM information provided by SMF. The app assistant information request may include a request for UL/DL data rate. The app assistant information request may include a request for data rate monitoring, wherein the processor is further configured to monitor a data rate, and transmit, via the transceiver, the app assistant information periodically or when the monitored data rate meets a condition. The request for data rate monitoring may include at least one of (1) type of monitoring, (2) reporting levels, (3) reporting periodicity, (4) reporting stop timer and (5) the required UL/DL data rate.

### BRIEF DESCRIPTION OF THE DRAWINGS

A more particular description of the embodiments briefly described above will be rendered by referring to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Figure 1 illustrates an example of AI/ML operation splitting for image recognition between end device and network server;
Figure 2 illustrates an example of the first embodiment;
Figure 3 illustrates an example of a variety of the first embodiment;
Figure 4 illustrates an example of the second embodiment;
Figure 5 illustrates an example of a variety of the second embodiment;
Figure 6 illustrates an example of the third embodiment;
Figure 7 illustrates an example of a variety of the third embodiment;
Figure 8 is a schematic flow chart diagram illustrating an embodiment of a method;
Figure 9 is a schematic flow chart diagram illustrating another embodiment of a method;
Figure 10 is a schematic flow chart diagram illustrating yet another embodiment of a method;
Figure 11 is a schematic flow chart diagram illustrating a further embodiment of a method;
Figure 12 is a schematic flow chart diagram illustrating some embodiment of a method; and
Figure 13 is a schematic block diagram illustrating another apparatus according to one embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

The input and output for AI/ML application server are summarized in Table 4.

**Table 4: input and output for AI/ML application server**

| | Input from UE | Input from 5GS | Output for app layer | Output for 5GS |
|---|---|---|---|---|
| AI/ML model download | the requested AI/ML model, the requested parameter quantify size, the available computation and energy resource, memory limitation etc. | predicted DL data rate, predicted UL and/or DL packet delay | AI/ML model and the parameter quantify size | Information of required DL data rate (or required bandwidth), possibly required UL and/or DL packet delay |
| | | (NOTE 1) | | |
| AI/ML model splitting | image resolution, FPS, the available computation and energy resource, memory limitation, the required E2E latency, privacy protection requirement, the available AI/ML model in the UE | predicted UL data rate, predicted UL and/or DL packet delay | AI/ML model and the splitting point | Information of required UL data rate |

For AI/ML model download, AI/ML application server should collect input from UE and from 5GS and make the decision on AI/ML model and the parameter quantify size. The input from UE includes the requested AI/ML model, the requested parameter quantify size, the available computation and energy resource, memory limitation etc. The input from UE may be transmitted over application layer, which is out of the scope of this disclosure. The input from 5GS includes the predicted DL data rate (from NG-RAN node, e.g., gNB), and optionally the predicted UL and/or DL packet delay. The predicted DL data rate can be regarded as the supported or available data rate that can be provided by the 5G network to the UE. Alternatively, the predicted data rate can be provided by the gNB for QoS flow or PDU session. Reversely, AI/ML application server should also provide 5GS with the required DL data rate or required bandwidth and even requested (or required) UL and/or DL packet delay as part of the QoS requirement. For the application layer, the AI/ML application server provides application in UE (note that application in UE can be expressed as application/UE) with the AI/ML model and the parameter quantify size.

For AI/ML model splitting, AI/ML application server should collect input from UE and from 5GS and make the decision on AI/ML model and the splitting point, and optionally the required image resolution and FPS. The input from UE includes image resolution, FPS, the available computation and energy resource, memory limitation, the required E2E latency, privacy protection requirement, the available AI/ML model in the UE etc. The input from 5GS includes predicted UL data rate, and optionally the predicted UL/DL packet delay. Reversely, AI/ML application server should also provide 5GS with the required (or requested) UL and/or DL data rate or bandwidth and even requested (or required) UL and/or DL packet delay as part of the QoS requirement. For the application layer, the AI/ML application server provides application/UE with the AI/ML model and the splitting point.

Actually, either application in UE (i.e. application/UE) or AI/ML application server can make the decision on AI/ML operation. If application/UE makes the decision, input from 5GS may be sent to UE directly in RRC message by NG-RAN node. Alternatively, input from 5GS may be sent to UE in NAS message by 5G core network entity, e.g., SMF or AMF. That is, NG-RAN node provides 5GC with the necessary information, and 5GC forwards it to UE in NAS message. For the case of AI/ML model downloading, application/UE provides AI/ML application server with the AI/ML model and the parameter quantify size over application layer. For the case of AI/ML model splitting, application/UE provides AI/ML application server with the AI/ML model and the splitting point over application layer. In the following embodiments, the AI/ML application server is taken as the decision maker as an example.

Incidentally, how to predict the DL data rate and/or the UL data rate for the UE or for the PDU session is out of scope of this disclosure. One example may be: gNB obtains the measurement results (e.g., channel state information, CSI) reported by UE, and gNB determines the modulation and coding (MCS) based on CSI. DL data rate can be predicted based on the MCS and available DL bandwidth. Besides, the number of concurrent active UE and PDU sessions can be considered when predicting the available DL bandwidth. Regarding the predicted UL and/or DL packet delay, gNB may obtain the statistics of the UL and/or DL packet delay of the existing UEs and makes the prediction for the new UE or the gNB performs QoS monitoring for packet delay as the specification states. Another example is: gNB calculates the actual UL and/or DL data rate based on the statistics as the predicted UL and/or DL data rate. In this disclosure, it is assumed that the gNB can predict the DL data rate and/or the UL data rate.

As mentioned in the background part, UL data rate is related to the AI/ML model, model split point, image resolution and the frame rate for the image recognition; while DL data rate is related to the AI/ML model and the parameter quantify size. So, the AI/ML application server expects to know the predicted UL data rate and the predicted DL data rate depending on actual use. To simplify description, unless specifically indicated, both "data rate" and "UL/DL data rate" means UL data rate and/or DL data rate for UE. Similarly, "UL/DL packet delay" means UL packet delay and/or DL packet delay for UE.

The application AI/ML traffic can be transmitted exclusively over AI/ML specific PDU session or in a regular PDU session where regular 5GS user traffic (i.e. non AI/ML traffic or non-Application AI/ML traffic) can also be transmitted in the regular PDU session.

AI/ML specific PDU session can be defined as follows. UE route selection policy (URSP) should be modified to enable UE to request a new PDU session establishment regardless of whether there is an existing PDU Session that matches all components in the selected Route Selection Descriptor (RSD) or not. In URSP rules, an exclusive indication is added in the RSD associated with AI/ML specific traffic descriptor as shown in Table 5. The exclusive indication can also be called as exclusive PDU session indication, or segregation indication. The exclusive indication can be enumerated as true or false or alternatively as 1 or 0. Alternatively, the exclusive indication can only be enumerated as true or 1. The underlined parts of Table 5 show the modification to the existing RSD.

**Table 5: Modified Route Selection Descriptor**

| **Information name** | **Description** | **Category** | **PCF permitted to modify in URSP** | **Scope** |
|---|---|---|---|---|
| Route Selection Descriptor Precedence | Determines the order in which the Route Selection Descriptors are to be applied. | Mandatory (NOTE 1) | Yes | UE context |
| **Route selection components** | *This part defines the route selection components* | Mandatory (NOTE 2) | | |
| SSC Mode Selection | One single value of SSC mode. (NOTE 5) | Optional | Yes | UE context |
| Network Slice Selection | Either a single value or a list of values of S-NSSAI(s). | Optional (NOTE 3) | Yes | UE context |
| DNN Selection | Either a single value or a list of values of DNN(s). | Optional | Yes | UE context |
| PDU Session Type Selection | One single value of PDU Session Type | Optional (NOTE 8) | Yes | UE context |
| Exclusive indication | One single value of exclusive indication | Optional (NOTE 9) | No | UE context |
| app assistant information request | One single value of app assistant information request | Optional (NOTE 10) | No | UE context |
| NOTE 9: a new PDU session should be established and used exclusively for the newly detected application which matches the corresponding traffic descriptor | | | | |
| NOTE 10: the indication indicates UE's higher layer to provide the app assistant information request (e.g., AI/ML indication) to NAS layer | | | | |

UE evaluates the URSP rules in the order of rule precedence and determines if the AI/ML application is matching the traffic descriptor of any URSP rule. When a URSP rule is determined to be applicable for the AI/ML application, the UE selects the corresponding RSD which contains the exclusive indication. Based on the selected RSD, UE determines SSC mode, PDU session type, network slice, DNN (Data Network Name) and access type etc. of the PDU session. As indicated by the exclusive indication, UE stops or will not start searching if there is an existing PDU Session that matches all components in the selected RSD. Instead, the UE tries to establish a new PDU Session using the values specified by the selected RSD. The URSP handling layer requests the UE NAS layer to establish a PDU session providing the PDU session attributes together with the exclusive indication. Upon successful completion of the PDU session establishment, the UE NAS layer shall additionally indicate the attributes of the established PDU session (e.g., PDU session identity, SSC mode, S-NSSAI, DNN, PDU session type, access type, PDU address, exclusive indication) of a newly established PDU session to the URSP handling layer. After that, the PDU session with exclusive indication will not be evaluated by UE's URSP handling layer to match all components in the selected RSD for other newly detected application.

According to a first embodiment, it is assumed that AI/ML application server requests 5GS to provide the app assistant information, e.g., predicted UL/DL data rate and/or predicted UL/DL packet delay over air interface for the PDU session or QoS flow of the UE. In the first embodiment, AF request for app assistant information is introduced without UE impact, which applies for the existing UEs.

Figure 2 illustrates the first embodiment, in which the procedures are related to PDU session establishment procedure described in TS 23.502 4.3.2.2.1 and PDU session modification procedure described in TS 23.502 4.3.3.2.1, with modifications.

In step 205, the AI/ML application requests for connectivity. Note that the AI/ML application and the UE are illustrated as two components in Figure 2. In fact, the AI/ML application can be an application installed in the UE, and accordingly can be referred to as AI/ML application in UE. Two use cases are considered. In one use case, it is assumed that the AI/ML specific PDU session concept is applied, i.e., new PDU session should be established for the AI/ML traffic exclusively. In another use case, it is assumed that the AI/ML traffic and the regular 5GS user traffic can share the same PDU session. However, no existing PDU session matches all components of AI/ML traffic. In short, for both use cases, UE determines to trigger a new PDU session establishment procedure for application AI/ML traffic. For example, the upper layer of the UE may request a 5GSM entity to establish a PDU session indicating one or more PDU session attributes. Incidentally, NAS layer message includes 5GMM transport message and 5GSM message. A 5GSM message is piggybacked in specific 5GMM transport messages. Accordingly, PDU session establishment request (which is 5GSM message) is piggybacked in UL NAS TRANSPORT message (which is 5GMM transport message).

In step 210, the PDU session establishment procedure is performed, by which the default QoS flow is established for the established PDU session.

In step 220, the AI/ML application in UE exchanges data with the AI/ML application server over the established PDU session. For example, UE may provide the parameters (e.g. input from UE) as shown in Table 4. Besides, UE may also provide AI/ML application server with predicted UL/DL data rate based on the measurement results over application layer. The predicted UL/DL data rate calculated by UE based on the measurement results over application layer may not be accurate compared with the predicted UL/DL data rate provided by the NG-RAN node.

In step 230, AI/ML application server determines that application AI/ML traffic or other application traffic type that needs app assistant information will be transmitted over the established PDU session, and makes decision that AF request with app assistant information request is necessary to be performed. Incidentally, the present disclosure is not limited to application AI/ML traffic but also applies to other application traffic types which need the app assistant information for the application server to make better decision or adaptation on the traffic (e.g. application AI/ML traffic or application traffic type which need the app assistant information).

In step 240, AF (or AI/ML application server) sends AF request with app assistant information request (which may be contained in the required QoS), to PCF via NEF based on TS 23.502 clause 4.15.6.6 (setting up an AF session with required QoS procedure). It is assumed that AF communicates with application server (e.g. AI/ML application server) in the data network (DN) behind the 5GC. The interaction between application server and AF is out of the scope of this disclosure. In this disclosure, AF can be regarded as the representative of the AI/ML application server. The app assistant information request can be at least one of "request for UL data rate", "request for DL data rate", "request for UL and DL data rates", "request for UL packet delay", "request for DL packet delay", and "request for UL and DL packet delays". Alternatively to "setting up an AF session with required QoS procedure", AF may provide the app assistant information request based on the procedure described in TS 23.502 4.3.6.4 (Transferring an AF request targeting an individual UE address to the relevant PCF). The app assistant information request can be regarded as: the AF subscribes to events of APP_ASSISTANT_INFO (see the detailed explanation with reference to Table 6 in the following step 280). AF may subscribe to events of APP_ASSISTANT_INFO in AF request separately or jointly with other events or QoS request.

In step 250, PCF initiates SM Policy Association Modification procedure as defined in TS 23.502 clause 4.16.5.2 to notify SMF about the modification of policies, which further triggers PDU session modification procedure. PCF includes the app assistant information request in the PCC rules provided to SMF. Please note that steps 240 and 250 are an implementation of transmitting the app assistant information request from AF to SMF.

In step 260, SMF configures NG-RAN node (indicated as "RAN" in Figure 2) with the app assistant information request, (e.g. via AMF). SMF may invoke Namf_Communication_N1N2MessageTransfer with N2 SM information. The N2 SM information contains PDU Session ID, QFI(s) and the app assistant information request. The app assistant information request can be associated with PDU session or QoS flow(s). If the app assistant information request is associated with PDU session, SMF provides PDU session ID and the app assistant information request associated with the PDU session ID. If the app assistant information request is associated with QoS flow, SMF provides PDU session ID, QFI and the app assistant information request associated with the QFI (where the QFI indicates a QoS flow contained in the PDU session indicated by the PDU session ID). Upon receiving the N2 SM information, the AMF may send N2 Message to the NG-RAN node. The N2 Message contains N2 SM information received from SMF and NAS message (PDU Session ID, N1 SM container (PDU Session Modification Command)).

In step 270, NG-RAN node obtains the app assistant information (e.g. at least one of predicted UL data rate and predicted DL data rate) and sends the app assistant information. For example, NG-RAN node sends N2 PDU session response message with N2 SM information containing app assistant information to AMF. Then, AMF forwards the N2 SM information received from NG-RAN node to SMF. The app assistant information can be associated with PDU session (e.g. PDU session ID) or QoS flow (e.g. QFI). If the app assistant information is associated with PDU session, NG-RAN node should provide PDU session ID and the app assistant information associated with the PDU session ID. If the app assistant information is associated with QoS flow, NG-RAN node should provide PDU session ID, QFI and the app assistant information associated with the QFI.

In step 280, SMF transmits the app assistant information obtained from NG-RAN node to AF, e.g. when exposing to AF (or via NEF). The procedure in TS 23.502 4.3.6.3 (Notification of User Plane Management Events) or 4.15.3.2.3 (NEF service operations information flow for event exposure) can be reused for SMF to provide the app assistant information to AF. SMF triggers Nsmf_EventExposure_Notify with the app assistant information. A new event APP_ASSISTANT_INFO should be defined in EventNotification. The underlined parts of Table 6 show the modification to the EventNotification contained in the Nsmf_EventExposure_Notify message, which is defined in TS 29.508 Table 5.6.2.5-1. That is, SMF may provide the appAssistantInfo (e.g., at least one of UL data rate and predicted DL data rate) for event APP_ASSISTANT_INFO. SMF sends Nsmf_EventExposure_Notify message with appAssistantInfo (i.e., app assistant information) to AF directly. Alternatively, SMF sends Nsmf_EventExposure_Notify message with appAssistantInfo to NEF. And NEF further forwards the appAssistantInfo in Nnef_EventExposure_Notify message towards AF.

**Table 6. Modified Definition of type EventNotification**

| Attribute name | Data type | P | Cardinality | Description | Applicability |
|---|---|---|---|---|---|
| ipv4Addr | Ipv4Addr | O | 0..1 | IPv4 address. May be included for event "PDU_SES_REL" or "PDU_SES_EST". | PduSessionSta tus |
| ipv6Prefixes | array(lpv6Prefix) | O | 1..N | Ipv6 prefixes. May be included for event "PDU_SES_REL" or "PDU_SES_EST". (NOTE 3) | PduSessionSta tus |
| ipv6Addrs | array(lpv6Addr) | O | 1..N | Ipv6 addresses. May be included for event "PDU_SES_REL" or "PDU_SES_EST". (NOTE 3) | PduSessionSta tus |
| pduSessType | PduSessionType | C | 0..1 | PDU session type. Shall be included if the PduSessionStatus feature is supported. | PduSessionSta tus |
| appAssisantInfo | AppAssistantInfo | O | 0..1 | app assistant information may be included for event "APP ASSISTANT INFO" | AppAssistantIn fo |

In step 290, the AI/ML application server makes decision for operation of AI/ML traffic (or other application traffic type that needs app assistant information) by taking the app assistant information provided by 5GS (i.e. by SMF, or by SMF via NEF) into consideration (i.e. at least based on the app assistant information). For example, AI/ML application server makes decision on downloading or splitting, the AI/ML model and optionally the splitting point based on 5GS's input (e.g. provided by UE in step 220 over application layer, and provided by SMF (from NG-RAN node) in step 280).

According to the first embodiment, the app assistant information is triggered to be provided only once, which may be suitable for the use case that AI/ML operation last for a short time, e.g., 1s. In this situation, the app assistant information should be provided as soon as possible. In addition, a single report of the app assistant information is enough.

According to a variety of the first embodiment, AI/ML operation may remain for a long time, e.g., several minutes or hours. It means that NG-RAN node should provide the latest app assistant information to AF periodically or upon reporting condition being met.

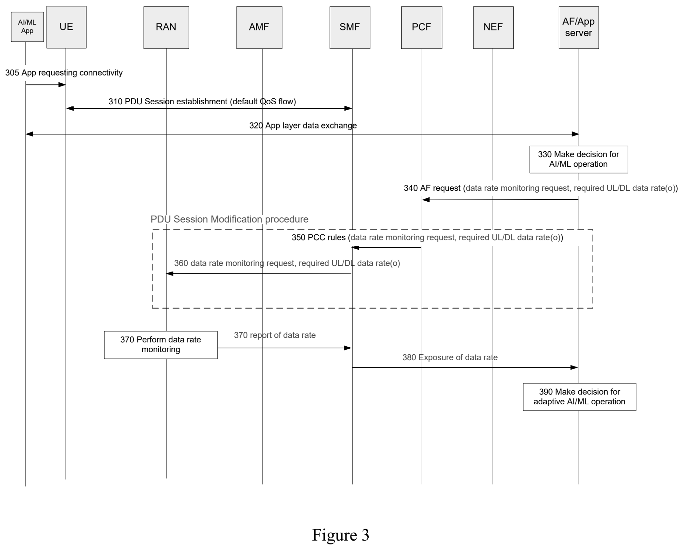

Figure 3 illustrates the variety of the first embodiment.

Steps 305, 310 and 320 are the same as steps 205, 210 and 220. Detailed explanations for steps 305, 310 and 320 are omitted.

In step 330, AI/ML application server determines that AI/ML traffic or other application traffic type that needs app assistant information will be transmitted over the established PDU session, and makes decision that continuous reporting of app assistant information is necessary. For example, the AI/ML application server may determine that the AI/ML traffic would last a long time, e.g., several minutes or hours. Optionally, in step 330, the AI/ML application server may make an initial decision on downloading or splitting, the AI/ML model and optionally the splitting point based on UE's input (including the predicted UL/DL data rate provided by UE).

In step 340, AF (or AI/ML application server) sends AF request with required QoS, which includes app assistant information request, to PCF via NEF. The app assistant information request may include data rate monitoring request. The data rate monitoring request includes the type of monitoring, i.e., "UL data rate monitoring", "DL data rate monitoring", or "UL and DL data rate monitoring". In addition, the data rate monitoring request may also contain the reporting parameters, e.g. the reporting condition (e.g. levels) of UL/DL data rate, the reporting periodicity, the reporting stop timer etc. If the reporting stop timer is provided, then NG-RAN node shall start the timer and stops data rate monitoring when the timer expires. In addition to providing reporting condition and/or reporting periodicity and/or reporting stop timer, a one-time reporting indication can also be included in the data rate monitoring, which is aligned with the first embodiment. Incidentally, the app assistant information request may also include the required UL/DL data rate. The required UL/DL data rate may be the requested/preferred UL/DL data rate for the AI/ML traffic. The required UL/DL data rate can be included in the data rate monitoring request. Alternatively, the required UL/DL data rate may be provided separately from data rate monitoring request. For example, the required UL/DL data rate can be contained in the required QoS in AF request. Further, the data rate monitoring request and the required UL/DL data can be provided together within one AF request, or be provided in separate AF request.

The data rate monitoring request can be regarded as: the AF subscribes to events of DATA_RATE_MONITORING. AF shall subscribe to events of DATA_RATE_MONITORING in AF request separately or jointly with other events or QoS request.

As shown in Table 3, 6 levels of required DL data rates for different AI/ML models are shown, e.g., level#1=33.6Mbps (for 1.0 MobileNet-224), level#2=54.4Mbps (for GoogleNet), level#3=184Mbps (for Inception-V3), level#4=200Mbps (for ResNet-50), level#5=480Mbps (for AlexNet and ResNet-152), level#6=1104Mbps (for VGG16). If it is assumed that AI/ML application server decides to use Inception-V3 model, with the required DL data rate level #3 (=184Mbps). If the NG-RAN node finds (e.g. in step 370) that the DL data rate is below level#3 (i.e. below 184Mbps), it triggers the data rate reporting towards AF via 5GC. In short, if the data rate meets a condition (e.g. becomes larger than or smaller than a level), NG-RAN node triggers data rate reporting. One way is to report the value of predicted data rate. Another way is to report the level or level range of data rate, e.g., above level 2 or in the range of level 2 and level 3.

Table 7 shows how AF subscribes data rate monitoring, which is modified from "table 5.14.2.1.6 Type QoSMonitoringInformaiton" in TS 29.122, with modifications underlined.

**Table 7: modified QoSMonitoringInformation**

| Attribute name | Data type | Cardinality | Description | Applicability |
|---|---|---|---|---|
| QoSMonitoringType | Enumerated (PacketDelay, DataRate, both) | | Indicates either packet delay. data rate or both should be monitored. | |
| **QoS Monitoring for Data rate** | This part defines the parameters used for data rate related QoS monitoring | | Exist if the QoS monitoring type is DataRate or both. | |
| reqQoSMonDatarate | | | Indicates the UL data rate, DL data rate and/or UL and DL data rate between the UE and the NG-RAN is to be monitored | |
| Levels of UL data rate | Array(ReportingLevel) | 1..N | Indicates the reporting levels of UL data rate. | |
| Levels of DL data rate | Array(ReportingLevel) | 1..N | Indicates the reporting levels of DL data rate. | |
| Requested UL data rate | | | Indicates the requested UL data rate | |
| Requested DL data rate | | | Indicates the requested DL data rate | |
| Reporting periodicity | | | Indicates the periodicity for the reporting | |
| Reporting stop timer | | | Indicates the stop timer for reporting | |
| **QoS Monitoring for Packet Delay** | This part defines the parameters used for packet delay related QoS monitoring | | Exist if the QoS monitoring type is PacketDelay or both. | |
| reqQosMonParams | array(RequestedQosMonitoringParameter) | 1..N | Indicates the UL packet delay, DL packet delay and/or round trip packet delay between the UE and the UPF is to be monitored when the QoS Monitoring for URLLC is enabled for the service data flow. | |
| repFreqs | array(ReportingFrequency) | 1..N | Indicates the frequency for the reporting, such as event triggered, periodic, when the PDU Session is released, and/or any combination. | |
| repThreshDI | Uinteger | 0..1 | Unsigned integer identifying a threshold in units of milliseconds for DL packet delay. It shall be present when the AF requests to report the downlink delay when a delay is exceeding the DL delay threshold. | |
| repThreshUl | Uinteger | 0..1 | Unsigned integer identifying a threshold in units of milliseconds for UL packet delay. It shall be present when the AF requests to report the uplink delay when a delay is exceeding the UL delay threshold. | |
| repThreshRp | Uinteger | 0..1 | Unsigned integer identifying a threshold in units of milliseconds for round trip packet delay. It shall be present when the AF requests to report the round trip delay when a delay is exceeding the round trip delay threshold. | |
| waitTime | DurationSec | 0..1 | Indicates the minimum waiting time between subsequent reports. Only applicable when the "repFreqs" attribute includes | |
| | | | "EVENT_TRIGGERED". | |
| repPeriod | DurationSec | 0..1 | Indicates the time interval between successive reporting. It shall be present when the AF requests to report the delay periodically. | |

In Table 7, the structure of QoSMonitoringInformation is modified to include the QoS monitoring type, the parameters of QoS monitoring for data rate and the parameters of QoS monitoring for packet delay. In the QoS monitoring for data rate, reqQoSMonDatarate IE indicates the type of monitoring, i.e., UL data rate monitoring, DL data rate monitoring or both. Besides, the levels of UL/DL data rate, the reporting periodicity, the reporting stop timer and the required UL/DL data rate are provided optionally.

Alternatively, a new MonitoringInformationForDataRate can be defined by including the reqQoSMonDatarate IE. Optionally, the level of UL/DL data rate, the required UL/DL data rate, the reporting periodicity, and the reporting stop timer will also be included. By doing so, the QoSMonitoringInformation remains unchanged.

In step 350, PCF initiates SM Policy Association Modification procedure as defined in TS 23.502 clause 4.16.5.2 to notify SMF about the modification of policies, which further triggers PDU session modification procedure. PCF includes the data rate monitoring request (and optionally the required UL/DL data rate) in the PCC rules provided to SMF. Steps 340 and 350 are an implementation of transmitting the data rate monitoring request (which is an example of app assistant information request) from AF to SMF.

Existing QoS Monitoring is only applied for packet delay measurement. According to the present disclosure, data rate monitoring and optionally the required UL/DL data rate are added in the PCC rules provided by PCF, as shown in Table 8, with underlined modifications.

**Table 8: modified QoS monitoring in PCC rule**

| **Information name** | **Description** | | **PCF permitted to modify for a dynamic PCC rule in the SMF** | **Differences compared with table 6.3. in TS 23.203 [4]** |
|---|---|---|---|---|
| **Policy control** | *This part defines how to apply policy control for the service data flow.* | | | |
| UL-guaranteed bitrate | The uplink guaranteed bitrate authorized for the service data flow | | Yes | None |
| DL-guaranteed bitrate | The downlink guaranteed bitrate authorized for the service data flow | | Yes | None |
| Requested UL data rate | The requested UL bitrate for the service data flow | | No | None |
| Requested DL data rate | The requested DL bitrate for the service data flow | | No | None |
| **Data rate Monitoring** | *This part describes PCC rule information related with data rate monitoring.* | | | |
| Data rate to be measured | UL data rate. DL data rate, or both UL and DL data rate. | | Yes | Added |
| Levels of UL data rate | Indicates the reporting levels of UL data rate. | | No | None |
| Levels of DL data rate | Indicates the reporting levels of DL data rate. | | No | None |
| **QoS Monitoring for URLLC** | *This part describes PCC rule information related with QoS Monitoring for URLLC.* | | | |
| QoS parameter(s) to be measured | UL packet delay, DL packet delay, or-round trip packet delay. | | Yes | Added |

Alternatively, the QoS monitoring information in PCC rule can be modified to enable data rate monitoring. E.g., the type of monitoring, i.e., "UL data rate", "DL data rate" and "both UL and DL data rate" can be added into the "QoS parameter(s) to be measured" IE.

In Step 360, SMF configures NG-RAN node to perform data rate monitoring request (or provides NG-RAN node with the required UL/DL data rate) via AMF. The N2 SM information contains PDU Session ID, QFI(s), the data rate monitoring request (and optionally the required UL/DL data rate). The data rate monitoring request (optionally together with the required UL/DL data rate) can be associated with PDU session or QoS flow. If the data rate monitoring request (optionally together with the required UL/DL data rate) is associated with PDU session, SMF provides PDU session ID and the data rate monitoring request (optionally together with the required UL/DL data rate) associated with the PDU session ID. If the data rate monitoring request (optionally together with the required UL/DL data rate) is associated with QoS flow, SMF provides PDU session ID, QFI and the data rate monitoring request (optionally together with the required UL/DL data rate) associated with the QFI. Upon receiving the N2 SM information, AMF may send N2 Message to the NG-RAN node. The N2 Message contains N2 SM information received from SMF and NAS message (PDU Session ID, N1 SM container (PDU Session Modification Command)). Incidentally, if the one-time reporting indication is also included in the data rate monitoring, steps 270, 280 and 290 may be performed accordingly (separated from steps 370, 380 and 390).

After receiving the data rate monitoring request, NG-RAN node shall, in step 370, monitor the UL/DL data rate for the PDU session (e.g. PDU session ID) or QoS flow (e.g. QFI) as requested. To be more specific, NG-RAN node shall predict the UL/DL data rate based on estimation or statistics as requested. The current reporting mechanism for QoS monitoring of packet delay can be reused for data rate monitoring. For example, NG-RAN node reports predicted UL/DL data rate result to the PSA UPF in the UL data packet or dummy UL packet. After that, UPF sends the data rate monitoring results to SMF. SMF forwards the data rate monitoring results to PCF or AF (via NEF). Based on the predicted UL and/or DL data rates provided by 5GS (e.g. from SMF), AI/ML application server is able to perform adaptive AI/ML operation. E.g., change the AI/ML model, the splitting point etc. It is assumed that the predicted UL and/or DL data rates provided by 5GS are more accurate than the predicted UL/DL data rate calculated by UE based on the measurement results over application layer provided in step 320.

Different from QoS monitoring for packet delay, data rate monitoring can be done by NG-RAN node without UPF. Therefore, a new reporting mechanism based on control plane can be considered without UPF involvement. When the condition as described in step 340 is met, NG-RAN node shall trigger the report of data rate as follows.

In TS 38.413 clause 9.3.1.12, the QoS Flow Level QoS Parameters should also be modified to trigger NG-RAN node to perform data rate monitoring or to provide the required UL/DL data rate. That is, data rate monitoring can be activated per QoS flow, and the required UL/DL data rate is provided per QoS flow. As shown in Table 9, the QoS Flow Level QoS Parameters sent from SMF to NG-RAN node are modified with underlined parts.

**Table 9: modified QoS Flow Level QoS Parameters**

| **IE/Group Name** | **Presence** | ***Range*** | **IE type and reference** | **Semantics description** | **Criticality** | **Assigned Criticality** |
|---|---|---|---|---|---|---|
| Required UL data rate | O | | Data rate | The required UL bitrate for the service data flow | YES | ignore |
| Required DL data rate | O | | Data rate | The required DL bitrate for the service data flow | YES | ignore |
| Data rate monitoring | O | | ENUMERATED (ULRate DLRate.Both.... stop) | Indicates to measure UL. or DL. or both UL/DL data rate for the associated QoS flow or stop the corresponding data rate monitoring. | | |
| Reporting level for UL data rate monitoring | O | | List of data rate | Indicates the reporting level for UL data rate monitoring | | |
| Reporting level for DL data rate monitoring | O | | List of data rate | Indicates the reporting level for DL data rate monitoring | | |
| QoS Monitoring Request | O | | ENUMERATED (UL, DL, Both..., stop) | Indicates to measure UL, or DL, or both UL/DL delays for the associated QoS flow or stop the | YES | ignore |
| | | | | corresponding QoS monitoring. | | |
| QoS Monitoring Reporting Frequency | O | | INTEGER (1.. 1800, ...) | Indicates the reporting frequency for RAN part delay for QoS monitoring. | YES | ignore |
| | | | | Units: second | | |

NG-RAN node monitors UL/DL data rate, and when the predicted UL/DL data rate meets the condition (e.g. if the data rate becomes larger than or smaller than a level), or periodically, NG-RAN node sends SMF the predicted UL/DL data rate. For example, NG-RAN node sends N2 PDU session response message with N2 SM information to AMF, and the N2 SM information contains the predicted UL/DL data rate. AMF forwards the N2 SM information received from NG-RAN node to SMF. The predicted UL/DL data rate can be associated with PDU session (e.g. PDU session ID) or QoS flow (e.g. QFI). New IEs for data rate monitoring should be added in EventNotification reported by SMF. The underlined parts of Table 10 show the modification to the EventNotification contained in the Nnef_EventExposure_Notify message, which is defined in TS 29.508 Table 5.6.2.5-1.

**Table 10: modified QoS Flow Level QoS Parameters**

| | | | | | |
|---|---|---|---|---|---|
| ulDelays | array(Uinteger) | O | 1..N | Uplink packet delay in units of milliseconds. (NOTE 5) | QoSMonitoring |
| dlDelays | array(Uinteger) | O | 1..N | Downlink packet delay in units of milliseconds. (NOTE 5) | QoSMonitoring |
| rtDelays | array(Uinteger) | O | 1..N | Round trip delay in units of milliseconds. (NOTE 5) | QoSMonitoring |
| ulDataRates | Uinteger | O | 0..1 | Uplink data rate in units of Mbps. | DataRateMonit oring |
| DIDataRates | Uinteger | O | 0..1 | Uplink data rate in units of Mbps. | DataRateMonit oring |

In step 380, SMF transmits the app assistant information obtained from NG-RAN node to AF, e.g. when exposing to AF (or via NEF).

In TS 23.548 clause 6.4.2, if SMF receives the indication of direct event notification from the PCF and SMF determines that the L-PSA UPF supports such reporting, the corresponding procedure should be modified to support data rate monitoring as follows. SMF sends data rate monitoring parameters and associates them with the target local NEF or local AF address to the L-PSA UPF via N4 rules. L-PSA UPF obtains data rate monitoring results from NG-RAN node and sends the notification related with data rate monitoring results over Nupf_EventExposure_Notify service operation to local NEF/AF.

In step 390, the AI/ML application server makes decision for operation of AI/ML traffic (or other application traffic type that needs app assistant information) by taking the app assistant information provided by 5GS (i.e. by SMF, or by SMF via NEF) into consideration (i.e. at least based on the app assistant information (i.e. the predicted UL/DL data rate)). For example, AI/ML application server makes decision on downloading or splitting, the AI/ML model and optionally the splitting point based on 5GS's input (e.g. provided by UE in step 320 over application layer (excluding the predicted UL/DL data rate calculated by UE based on the measurement results over application layer), and provided by SMF (from NG-RAN node) in step 380 (i.e. the predicted UL/DL data rate from NG-RAN node)).

Once the data rate is reported by SMF (from NG-RAN node) (each time step 380 is triggered), the step 390 can be performed to make decision on adaptive operation of AI/ML traffic. As mentioned in the description of step 340, if reporting stop timer is contained in the data rate monitoring request, NG-RAN node stops monitoring UL/DL data rate once the reporting stop timer is expired. Alternatively, if the reporting stop timer is not contained in the data rate monitoring request, AF may send AF request with stop indication for data rate monitoring when AF wants to stop data rate monitoring. Then PCF shall provide SMF the stop indication for data rate monitoring contained in PCC rules. Then SMF shall indicate NG-RAN node to stop the data rate monitoring in the N2 information transmitted via AMF.

In the first embodiment or the variety of the first embodiment, if handover happens to UE, the data rate monitoring request and/or the required UL/DL data rate may also be provided to the target NG-RAN node to which UE is handovered. For Xn based handover, the data rate monitoring request and/or the required UL/DL data rate should be contained in Handover request message as defined in TS 38.423. Alternatively, the data rate monitoring request and/or the required UL/DL data rate can be provided by SMF via AMF in Path Switch Request Acknowledge message as defined in TS 38.413. For N2 based handover, the data rate monitoring request and/or the required UL/DL data rate should be provided by SMF via AMF in Handover request message as defined in TS 38.413.

For CU-DU split case for gNB, the data rate monitoring request and/or the required UL/DL data rate may also be provided to from gNB-CU to gNB-DU over F1 interface. E.g., gNB-CU sends the UE CONTEXT SETUP/MODIFICATION REQUEST message to gNB-DU which contains the data rate monitoring request and/or the required UL/DL data rate.

According to a second embodiment, it is assumed that gNB is triggered by (UE via 5GC or SMF) to provide the application assistant information to 5GC (e.g. SMF), which further exposes the application assistant information to AF. In the second embodiment, UE request (via SMF) for app assistant information is introduced with UE impact, which applies for new UE.

As shown in Table 5, an indication of app assistant information request is added in the Route Selection Descriptor associated with AI/ML specific traffic descriptor. The app assistant information request indicates UE's higher layer (App layer or UE's URSP handling layer) to provide the application assistant information request to NAS layer. If it is UE's app layer to provide the request, UE's URSP handling layer should indicate the app layer to provide the request. Otherwise, UE's URSP handling layer provides the application assistant information request to NAS layer, together with the requested PDU session attributes.

Alternatively, UE is pre-configured with the specific application identifier or S-NSSAI/SST (which means S-NSSAI or SST) or DNN or traffic descriptor which requests for app assistant information. In this way, no impact on URSP rule is expected.

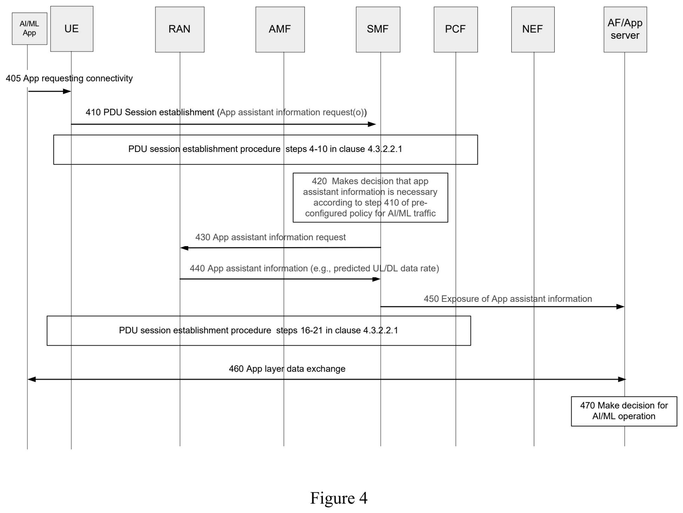

Figure 4 illustrates the second embodiment, in which the procedure is related to PDU session establishment procedure described in TS 23.502 4.3.2.2.1 with modifications.

In step 405, the AI/ML application requests for connectivity. This step is the same as step 205.

In step 410, PDU session Establishment Request is sent to SMF. The app assistant information request can be optionally sent to SMF in step 410, for example, by being included in the PDU session Establishment Request (which is a 5GSM message). The 5GSM message (e.g. PDU session Establishment Request) is piggybacked in the 5GMM transport message (e.g. UL NAS transport message) from UE to AMF. Then, AMF forwards the 5GSM message to SMF in Nsmf_PDUSession_CreateSMContext Request. Alternative, the app assistant information request can be included in the UL NAS transport message directly. AMF forwards the app assistant information request to SMF directly in Nsmf_PDUSession_CreateSMContext Request.

After step 410, steps 4-10 of PDU session establishment procedure described in TS 23.502 4.3.2.2.1 are performed.

In step 420, SFM makes decision that app assistant information is necessary. This can be done by receiving the app assistant information request in step 410 (i.e. triggered by UE).

Alternatively, SMF may makes decision that app assistant information is necessary by pre-configuration. That is, the app assistant information request is not included in the PDU session establishment request in step 410. Instead, SMF may recognize the PDU session is established for AI/ML traffic or other application traffic type that needs app assistant information by at least four use cases described below:
(1) AI/ML specific 5QI: PCF provides 5QI in PCC rules. It is assumed that SMF is pre-configured with the specific 5QI which needs app assistant information provided by NG-RAN node. Accordingly, when SMF obtains the 5QI in PDU session establishment procedure, it can recognize whether the established PDU session needs app assistant information provided by NG-RAN node.
(2) AI/ML specific S-NSSAI or SST and/or DNN: UE provides S-NSSAI and UE requested DNN in PDU session establishment request. If the NAS message does not contain an S-NSSAI, AMF determines an S-NSSAI of the Serving PLMN for the requested PDU Session from the current Allowed NSSAI for UE. That is, S-NSSAI will be contained in Nsmf_PDUSession_CreateSMContext Request from AMF anyway. The 1) S-NSSAI or the SST contained in the S-NSSAI, or 2) DNN, or 3) the combination of S-NSSAI or SST and DNN refers to AI/ML traffic or other traffic which needs app assistant information provided by NG-RAN node. It is assumed that SMF is pre-configured with the specific S-NSSAI or SST and/or DNN which needs app assistant information provided by NG-RAN node.
(3) AI/ML specific AppID: PCF provides application identifier (AppID) in PCC rules. Alternative, UE may provide the application identifier (AppID) in PDU session establishment request. It is assumed that SMF is pre-configured with the specific application identifier (AppID) which needs app assistant information provided by NG-RAN node.
(4) AI/ML indication associated with the flow description: PCF may provide flow description (or service data flow template or service data flow filters) with AI/ML indication or app assistant information request.

Since this disclosure is not limited to AI/ML traffic and also applies to other types of traffic that needs app assistant information, the operator may define the 5QIs (or S-NSSAIs or SST or AppID) which need app assistant information. That is, SMF may be pre-configured (e.g., by OAM) with the list of 5QIs (or S-NSSAIs or SST or AppID) which need app assistant information. Besides, SMF may make decision based on the subscription data obtained from UDM. That is, the subscription data includes an indication of application assistant information request for specific 5QIs (or S-NSSAIs or SST or AppID).

Steps 430, 440 and 450 are the same as steps 260, 270 and 280.

After step 450, steps 16-21 of PDU session establishment procedure described in TS 23.502 4.3.2.2.1 are performed.

After the PDU session is established, the AI/ML application in UE exchanges data with the AI/ML application server over the established PDU session in step 460.

In step 470, the AI/ML application server makes decision for AI/ML operation by taking app assistant information provided by 5GS (e.g. provided by UE in step 460 over application layer, and provided by SMF (from NG-RAN node) in step 450) into consideration. Step 470 is the same as step 290.

Similar to the first embodiment, according to the second embodiment, the app assistant information is triggered to be provided only once, which may be only suitable for the use case that AI/ML operation last for a short time.

According to a variety of the second embodiment, AI/ML operation may remain for a long time, e.g., several minutes or hours. It means that NG-RAN node should provide the latest app assistant information to AF periodically or upon reporting condition met.

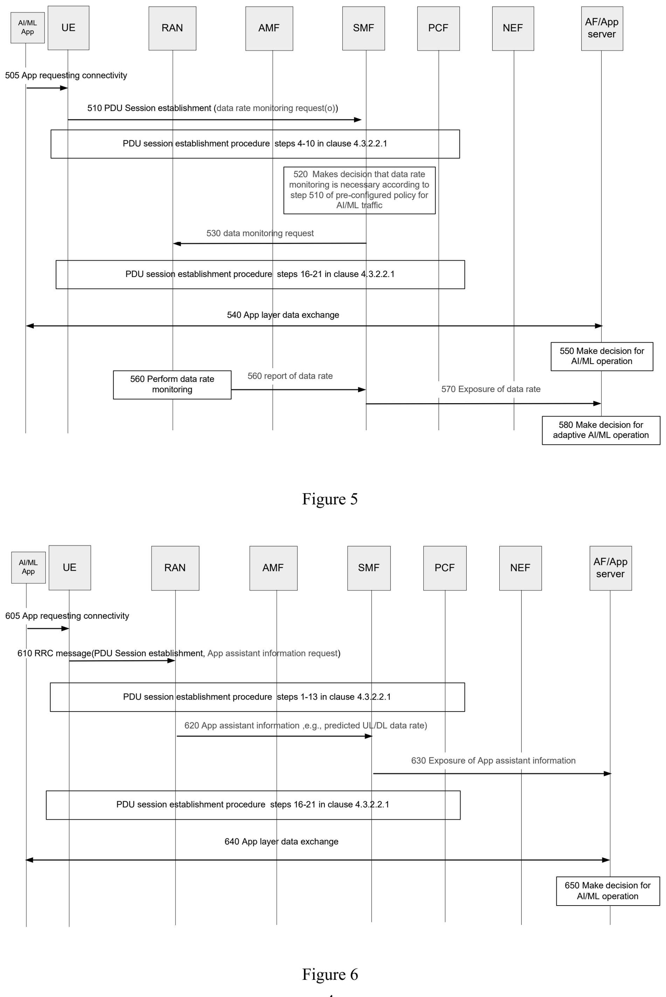

Figure 5 illustrates the variety of the second embodiment. It is assumed that gNB is triggered by (UE via 5GC) (or SMF) to perform data rate monitoring and reporting.

As shown in Table 5, an indication of data rate monitoring request is added in the Route Selection Descriptor associated with AI/ML specific traffic descriptor. The data rate monitoring request indicates UE's higher layer (App layer or UE's URSP handling layer) to provide the data rate monitoring request to NAS layer.

Steps 505, 510 and 520 are almost the same as steps 405, 410 and 420 except that the app assistant information request is replaced with data rate monitoring request.

Steps 530, 560, 570 and 580 are the same as steps 360, 370, 380 and 390. Step 540 is the same as step 320. In step 550, AF may make an initial decision on downloading or splitting, the AI/ML model and optionally the splitting point based on UE's input (including the predicted UL/DL data rate provided by UE) in step 540.

In particular, in step 560, NG-RAN node performs data rate monitoring, and may report the predicted UL/DL data rate periodically, or when the reporting condition is met.

According to the second embodiment or the variety of the second embodiment, the app assistant information request (or data rate monitoring request), if provided from UE to SMF, is provided by using the PDU session establishment procedure. Alternatively, the app assistant information request (or data rate monitoring request) may be provided from UE to SMF by using the PDU session modification procedure. For example, the app assistant information request (or data rate monitoring request) may be contained in NAS message in the PDU session modification procedure from UE to SMF.

According to a third embodiment, it is assumed that gNB is triggered by UE directly to provide the application assistant information to 5GC (e.g. SMF) for AI/ML traffic, which further exposes the application assistant information to AF. In the third embodiment, UE request for app assistant information is introduced with UE impact, which applies for new UE.

Figure 6 illustrates the third embodiment, in which the procedure is related to PDU session establishment procedure described in TS 23.502 4.3.2.2.1 with modifications.

In step 605, the AI/ML application requests for connectivity. This step is the same as step 205.

In step 610, UE sends UL RRC message with the app assistant information request to NG-RAN Node. The UL RRC message may also contain the NAS message, e.g., PDU session establishment request. In step 610, the upper layer sends the app assistant information request to RRC layer (or RRC entity). One way is that upper layer (e.g., app layer) provides RRC layer with the app assistant information request directly, and NAS layer provides RRC layer the NAS message. Alternatively, NAS layer provides RRC layer with the app assistant information request and the NAS message.

Steps 1-13 of PDU session establishment procedure described in TS 23.502 4.3.2.2.1 are performed after step 610.

Steps 620, 630, 640 and 650 are the same as steps 440, 450, 460 and 470.

Alternatively, NG-RAN node can provide the app assistant information to UE instead of SMF. That is, NG-RAN node may include the app assistant information into the DL RRC message towards UE. After UE's RRC layer obtains the APP assistant information from NG-RAN node, UE's RRC layer forwards the app assistant information to the upper layer (e.g., app layer). UE's app layer may make the decision for AI/ML operation at least according to the app assistant information. One possible way is UE's app layer may provide RRC layer with the required UL/DL data rate. Alternatively, UE triggers PDU session modification procedure by providing SMF with the required UL/DL data rate. Further alternatively, UE informs AI/ML application server of the results over application layer, and optionally provide the data rate monitoring request and/or the required UL/DL data rate. If AI/ML application server makes the decision for AI/ML operation, UE's app layer sends the app assistant information to the AI/ML application server over application layer as shown in step 640. After that, the AI/ML application server makes decision based on the app assistant information as well as other parameters (e.g. input from UE as shown in Table 4) provided by UE over application layer.

Similar to the first or second embodiment, according to the third embodiment, the app assistant information is triggered to be provided only once, which may be suitable for the use case that AI/ML operation last for a short time.

According to a variety of the third embodiment, AI/ML operation may remain for a long time, e.g., several minutes or hours. It means that NG-RAN node should provide the latest app assistant information to AF periodically or upon reporting condition met.

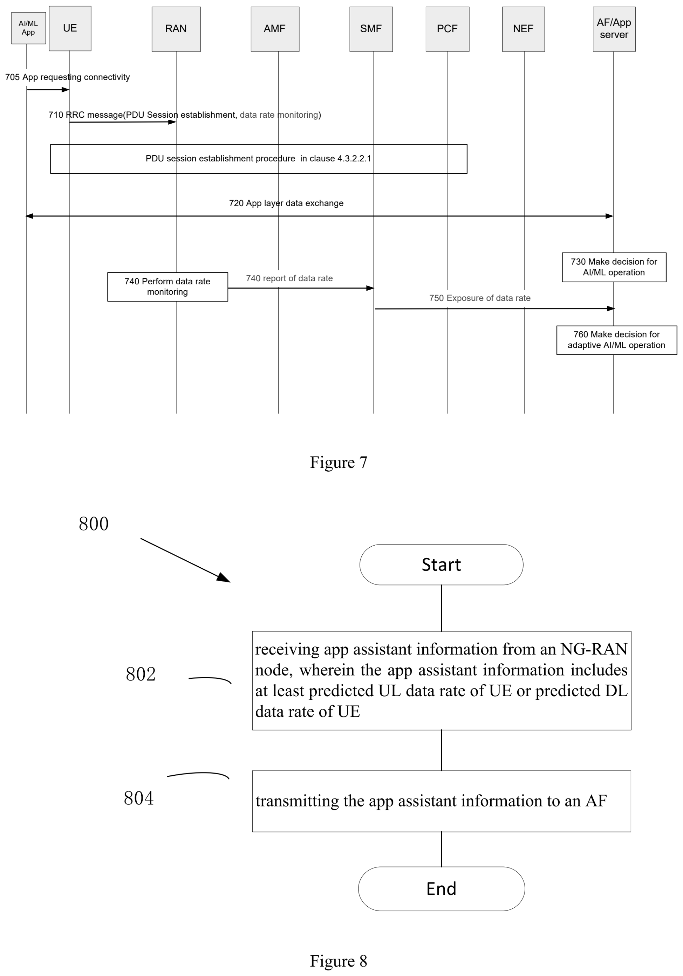

Figure 7 illustrates the variety of the third embodiment.

Steps 705 and 710 are almost the same as steps 605 and 610 except that the app assistant information request is replaced with data rate monitoring request.

PDU session establishment procedure described in TS 23.502 4.3.2.2.1 is performed after step 710.

Steps 720, 730, 740, 750 and 760 are the same as steps 540, 550, 560, 570 and 580.

Similar to the third embodiment, NG-RAN node may provide the app assistant information to UE instead of SMF. In particular, each time the data rate shall be reported, it is provided (reported) to UE.

Figure 8 is a schematic flow chart diagram illustrating an embodiment of a method 800 according to the present application. In some embodiments, the method 800 is performed by a network function such as an SMF or a network function with an SMF. In certain embodiments, the method 800 may be performed by a processor executing program code, for example, a microcontroller, a microprocessor, a CPU, a GPU, an auxiliary processing unit, a FPGA, or the like.

The method 800 comprises 802 receiving app assistant information from an NG-RAN node, wherein the app assistant information includes at least one of predicted UL data rate of UE and predicted DL data rate of UE; and 804 transmitting the app assistant information to an AF.

In one embodiment, the method further comprises transmitting an app assistant information request to the NG-RAN node. The app assistant information request may be constructed based on an app assistant information request obtained from another network entity, e.g. based on the app assistant information request included in PCC rules from PCF. The app assistant information request may alternatively be constructed based on determination that the app assistant information is necessary for an established PDU session or QoS flow, e.g. based on specific combination of at least one of 5QI, S-NSSAI, SST, DNN, and application identifier according to pre-configuration. The app assistant information request may further alternatively be constructed based on an app assistant information request received from UE. In some embodiment, the app assistant information request is contained in N2 SM information to be transmitted to the NG-RAN node via AMF.

The app assistant information request may include a request for UL/DL data rate, or a request for data rate monitoring. The request for data rate monitoring may include at least one of (1) type of monitoring, (2) reporting levels, (3) reporting periodicity, (4) reporting stop timer and (5) the required UL/DL data rate.

In some embodiment, the app assistant information is exposed directly to the AF or via NEF to the AF.

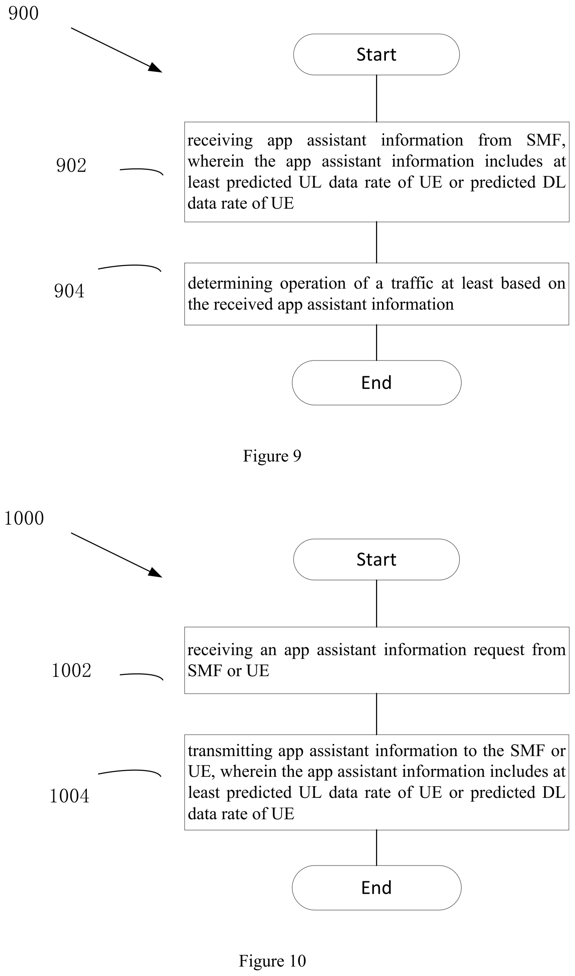

Figure 9 is a schematic flow chart diagram illustrating an embodiment of a method 900 according to the present application. In some embodiments, the method 900 is performed by an application function or application server. In certain embodiments, the method 900 may be performed by a processor executing program code, for example, a microcontroller, a microprocessor, a CPU, a GPU, an auxiliary processing unit, a FPGA, or the like.

The method 900 comprises 902 receiving app assistant information from SMF, wherein the app assistant information includes at least one of predicted UL data rate of UE and predicted DL data rate of UE; and 904 determining operation of a traffic at least based on the received app assistant information.

In one embodiment, the method further comprises transmitting an app assistant information request to SMF. For example, the app assistant information request is transmitted to PCF so as to be included in PCC rules to the SMF. The app assistant information request may include a request for UL/DL data rate, or a request for data rate monitoring. The request for data rate monitoring may include at least one of (1) type of monitoring, (2) reporting levels, (3) reporting periodicity, (4) reporting stop timer and (5) the required UL/DL data rate.

Figure 10 is a schematic flow chart diagram illustrating an embodiment of a method 1000 according to the present application. In some embodiments, the method 1000 is performed by an NG-RAN node (e.g. gNB). In certain embodiments, the method 1000 may be performed by a processor executing program code, for example, a microcontroller, a microprocessor, a CPU, a GPU, an auxiliary processing unit, a FPGA, or the like.

The method 1000 comprises 1002 receiving an app assistant information request from SMF or UE; and 1004 transmitting app assistant information to the SMF or UE, wherein the app assistant information includes at least one of predicted UL data rate of UE and predicted DL data rate of UE.

In one embodiment, the app assistant information request is received via AMF by being included in N2 SM information provided by SMF.

In some embodiment, the app assistant information request includes a request for UL/DL data rate.

In some embodiment, the app assistant information request includes a request for data rate monitoring, wherein the method further comprises monitoring a data rate, and transmitting the app assistant information periodically or when the monitored data rate meets a condition. The request for data rate monitoring may include at least one of (1) type of monitoring, (2) reporting levels, (3) reporting periodicity, (4) reporting stop timer and (5) the required UL/DL data rate.

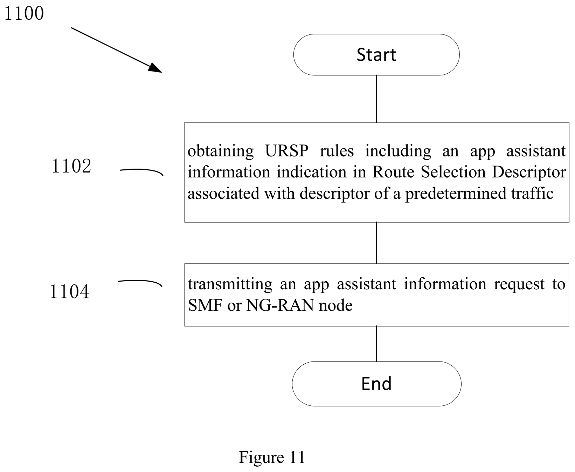

Figure 11 is a schematic flow chart diagram illustrating an embodiment of a method 1100 according to the present application. In some embodiments, the method 1100 is performed by an apparatus, such as a remote unit (e.g. UE). In certain embodiments, the method 1100 may be performed by a processor executing program code, for example, a microcontroller, a microprocessor, a CPU, a GPU, an auxiliary processing unit, a FPGA, or the like.

The method 1100 comprises 1102 obtaining URSP rules including an app assistant information indication in Route Selection Descriptor associated with descriptor of a predetermined traffic; and 1104 transmitting an app assistant information request to SMF or NG-RAN node. The URSP rules may be preconfigured in the UE. Alternatively, the URSP rules may be received from 5GS via NG-RAN node, e.g. on UE's URSP handling layer. The predetermined traffic may be AI/ML traffic. When the app assistant information request is transmitted to SMF, UE's URSP handling layer sends an app assistant information request to NAS layer, and the NAS layer includes the app assistant information request into NAS massage to SMF. When the app assistant information request is transmitted to NG-RAN node, UE's URSP handling layer sends an app assistant information request to RRC layer, and the RRC layer includes the app assistant information request into RRC message to NG-RAN node.

In some embodiment, the app assistant information request includes a request for UL/DL data rate, or a request for data rate monitoring.

In some embodiment, the method further comprises receiving app assistant information from the NG-RAN node, wherein the app assistant information includes at least one of predicted UL data rate of UE and predicted DL data rate of UE.

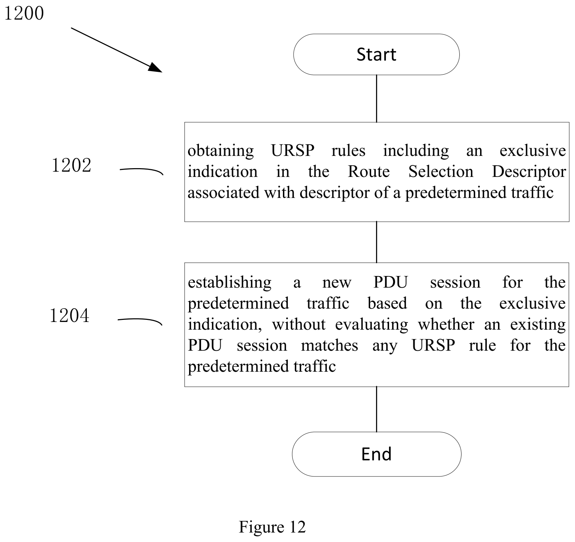

Figure 12 is a schematic flow chart diagram illustrating an embodiment of a method 1200 according to the present application. In some embodiments, the method 1200 is performed by an apparatus, such as a remote unit (e.g. UE). In certain embodiments, the method 1200 may be performed by a processor executing program code, for example, a microcontroller, a microprocessor, a CPU, a GPU, an auxiliary processing unit, a FPGA, or the like.

The method 1200 comprises 1202 obtaining URSP rules including an exclusive indication in the Route Selection Descriptor associated with descriptor of a predetermined traffic; and 1204 establishing a new PDU session for the predetermined traffic based on the exclusive indication, without evaluating whether an existing PDU session matches any URSP rule for the predetermined traffic. The URSP rules may be preconfigured in the UE. Alternatively, the URSP rules may be received from 5GS via NG-RAN node, e.g. on UE's URSP handling layer. The predetermined traffic may be AI/ML traffic.

In some embodiment, UE's NAS layer indicates attributes of the established PDU session and the exclusive indication to US's URSP handling layer. Then for a newly detected application, UE's URSP handling will not evaluate the existing PDU session with exclusive indication when he existing PDU session with exclusive indication matches all components in the selected Route Selection Descriptor.

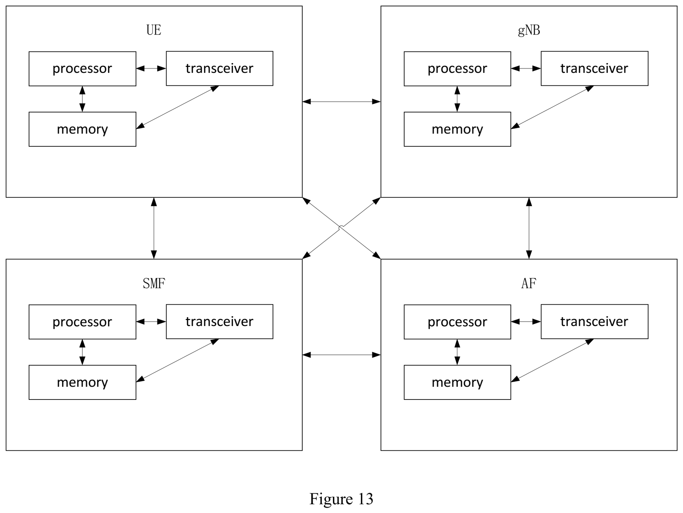

Figure 13 is a schematic block diagram illustrating apparatuses according to one embodiment.

Referring to Figure 13, the SMF includes a processor, a memory, and a transceiver. The processor implements a function, a process, and/or a method which are proposed in Figure 8.

The SMF comprises a processor; and a transceiver coupled to the processor, wherein the processor is configured to: receive, via the transceiver, app assistant information from a NG-RAN node, wherein the app assistant information includes at least one of predicted UL data rate of UE and predicted DL data rate of UE; and transmit, via the transceiver, the app assistant information to an AF.

In one embodiment, the processor is further configured to transmit, via the transceiver, an app assistant information request to the NG-RAN node. The app assistant information request may be constructed based on an app assistant information request obtained from another network entity, e.g. based on the app assistant information request included in PCC rules from PCF. The app assistant information request may alternatively be constructed based on determination that the app assistant information is necessary for an established PDU session or QoS flow, e.g. based on specific combination of at least one of 5QI, S-NSSAI, SST, DNN, and application identifier according to pre-configuration. The app assistant information request may further alternatively be constructed based on an app assistant information request received from UE. In some embodiment, the app assistant information request is contained in N2 SM information to be transmitted to the NG-RAN node via AMF.

The app assistant information request may include a request for UL/DL data rate, or a request for data rate monitoring. The request for data rate monitoring may include at least one of (1) type of monitoring, (2) reporting levels, (3) reporting periodicity, (4) reporting stop timer and (5) the required UL/DL data rate.

In some embodiment, the app assistant information is exposed directly to the AF or via NEF to the AF.

Referring to Figure 13, the AF includes a processor, a memory, and a transceiver. The processor implements a function, a process, and/or a method which are proposed in Figure 9.

The AF comprises a processor; and a transceiver coupled to the processor, wherein the processor is configured to: receive, via the transceiver, app assistant information from SMF, wherein the app assistant information includes at least one of predicted UL data rate of UE and predicted DL data rate of UE; and determine operation of a traffic at least based on the received app assistant information.

In one embodiment, the processor is further configured to transmit, via the transceiver, an app assistant information request to SMF. For example, the app assistant information request is transmitted to PCF so as to be included in PCC rules to the SMF. The app assistant information request may include a request for UL/DL data rate, or a request for data rate monitoring. The request for data rate monitoring may include at least one of (1) type of monitoring, (2) reporting levels, (3) reporting periodicity, (4) reporting stop timer and (5) the required UL/DL data rate.

Referring to Figure 13, the NG-RAN node (e.g. gNB) includes a processor, a memory, and a transceiver. The processor implements a function, a process, and/or a method which are proposed in Figure 10.

The NG-RAN node comprises a processor; and a transceiver coupled to the processor, wherein the processor is configured to: receive, via the transceiver, an app assistant information request from SMF or UE; and transmit, via the transceiver, app assistant information to the SMF or UE, wherein the app assistant information includes at least one of predicted UL data rate of UE and predicted DL data rate of UE.

In one embodiment, the app assistant information request is received via AMF by being included in N2 SM information provided by SMF.

In some embodiment, the app assistant information request includes a request for UL/DL data rate.

In some embodiment, the app assistant information request includes a request for data rate monitoring, wherein the processor is further configured to monitor a data rate, and transmit, via the transceiver, the app assistant information periodically or when the monitored data rate meets a condition. The request for data rate monitoring may include at least one of (1) type of monitoring, (2) reporting levels, (3) reporting periodicity, (4) reporting stop timer and (5) the required UL/DL data rate.

Referring to Figure 13, the UE includes a processor, a memory, and a transceiver. The processor implements a function, a process, and/or a method which are proposed in Figure 11 or Figure 12.

The UE (implementing the method proposed in Figure 11) comprises a processor; and a transceiver coupled to the processor, wherein the processor is configured to: obtain URSP rules including an app assistant information indication in Route Selection Descriptor associated with descriptor of a predetermined traffic; and transmit, via the transceiver, an app assistant information request to SMF or NG-RAN node. The URSP rules may be preconfigured in the UE. Alternatively, the URSP rules may be received from 5GS via NG-RAN node, e.g. on UE's URSP handling layer. The predetermined traffic may be AI/ML traffic. When the app assistant information request is transmitted to SMF, UE's URSP handling layer sends an app assistant information request to NAS layer, and the NAS layer includes the app assistant information request into NAS massage to SMF. When the app assistant information request is transmitted to NG-RAN node, UE's URSP handling layer sends an app assistant information request to RRC layer, and the RRC layer includes the app assistant information request into RRC message to NG-RAN node.

In some embodiment, the app assistant information request includes a request for UL/DL data rate, or a request for data rate monitoring.

In some embodiment, the processor is further configured to receive, via the transceiver, app assistant information from the NG-RAN node, wherein the app assistant information includes at least one of predicted UL data rate of UE and predicted DL data rate of UE.

The UE (implementing the method proposed in Figure 12) comprises a processor; and a transceiver coupled to the processor, wherein the processor is configured to: obtain URSP rules including an exclusive indication in the Route Selection Descriptor associated with descriptor of a predetermined traffic; and establish a new PDU session for the predetermined traffic based on the exclusive indication, without evaluating whether an existing PDU session matches any URSP rule for the predetermined traffic. The URSP rules may be preconfigured in the UE. Alternatively, the URSP rules may be received from 5GS via NG-RAN node, e.g. on UE's URSP handling layer. The predetermined traffic may be AI/ML traffic.

In some embodiment, UE's NAS layer indicates attributes of the established PDU session and the exclusive indication to US's URSP handling layer. Then for a newly detected application, UE's URSP handling will not evaluate the existing PDU session with exclusive indication when the existing PDU session with exclusive indication matches all components in the selected Route Selection Descriptor.

Layers of a radio interface protocol may be implemented by the processors. The memories are connected with the processors to store various pieces of information for driving the processors. The transceivers are connected with the processors to transmit and/or receive message or information. Needless to say, the transceiver may be implemented as a transmitter to transmit the information and a receiver to receive the information.

The memories may be positioned inside or outside the processors and connected with the processors by various well-known means.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment. It is apparent that the claims that are not expressly cited in the claims are combined to form an embodiment or be included in a new claim.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Embodiments may be practiced in other specific forms. The described embodiments are to be considered in all respects to be only illustrative and not restrictive. The scope of the invention is, therefore, indicated by the appended claims rather than by the foregoing description. All changes which come within the meaning and range of equivalency of the claims are to be embraced within their scope.
Aspects of the present disclosure may be defined by the following numbered clauses:
1. A session management function (SMF) of a network architecture, comprising:
   a processor; and
   a transceiver coupled to the processor,
   wherein the processor is configured to:
      receive, via the transceiver, app assistant information from a Next Generation Radio Access Network (NG-RAN) node, wherein the app assistant information includes at least one of predicted uplink (UL) data rate of user equipment (UE) and predicted downlink (DL) data rate of UE; and
      transmit, via the transceiver, the app assistant information to an Application Function (AF).
2. The SMF of clause 1, wherein, the processor is further configured to transmit, via the transceiver, an app assistant information request to the NG-RAN node.
3. The SMF of clause 2, wherein, the processor is further configured to
   construct the app assistant information request based on an app assistant information request obtained from another network entity.
4. The SMF of clause 2, wherein, the processor is further configured to
   construct the app assistant information request based on determination that the app assistant information is necessary for an established Protocol Data Unit (PDU) session or QoS flow.
5. The SMF of clause 2, wherein, the processor is further configured to
   construct the app assistant information request based on an app assistant information request from UE.
6. The SMF of clause 2, wherein, the app assistant information request includes a request for UL/DL data rate, or a request for data rate monitoring.
7. The SMF of clause 6, wherein, the request for data rate monitoring includes at least one of (1) type of monitoring, (2) reporting levels, (3) reporting periodicity, (4) reporting stop timer and (5) the required UL/DL data rate.
8. The SMF of clause 1, wherein, the app assistant information is exposed directly to the AF or via Network Exposure Function (NEF) to the AF.
9. A application function (AF) of a network architecture, comprising:
   a processor; and
   a transceiver coupled to the processor,
   wherein the processor is configured to:
      receive, via the transceiver, app assistant information from Session Management Function (SMF), wherein the app assistant information includes at least one of predicted uplink (UL) data rate of user equipment (UE) and predicted downlink (DL) data rate of UE; and
      determine operation of a traffic at least based on the received app assistant information.
10. The AF of clause 9, wherein, the processor is further configured to:
   transmit, via the transceiver, an app assistant information request to the SMF.
11. The AF of clause 10, wherein, the app assistant information request includes a request for UL/DL data rate, or a request for data rate monitoring.
12. The AF of clause 11, wherein, the request for data rate monitoring includes at least one of (1) type of monitoring, (2) reporting levels, (3) reporting periodicity, (4) reporting stop timer and (5) the required UL/DL data rate.
13. A Next Generation Radio Access Network (NG-RAN) node of a network architecture, comprising:
   a processor; and
   a transceiver coupled to the processor,
   wherein the processor is configured to:
      receive, via the transceiver, an app assistant information request from Session Management Function (SMF) or user equipment (UE); and
      transmit, via the transceiver, app assistant information to the SMF or the UE, wherein the app assistant information includes at least predicted uplink (UL) data rate of UE or predicted downlink (DL) data rate of UE.
14. The NG-RAN node of clause 13, wherein, the app assistant information request includes a request for UL/DL data rate.
15. The NG-RAN node of clause 13, wherein,
   the app assistant information request includes a request for data rate monitoring,
   the processor is further configured to monitor a data rate, and transmit, via the transceiver, the app assistant information periodically or when the monitored data rate meets a condition.

## Claims

1. A session management function (SMF) of a network architecture, comprising:
a processor; and
a transceiver coupled to the processor,
wherein the processor is configured to:
receive, via the transceiver, Policy and Charging Control (PCC) rules including a request for data rate monitoring, from a policy control function (PCF);
transmit, via the transceiver, session management information that includes the request for data rate monitoring to a Next Generation Radio Access Network (NG-RAN) node; and
configure a User Plane Function PDU Session Anchor (PSA UPF) to, upon receiving data rate monitoring results from the NG-RAN node, expose the data rate monitoring results to a first node.

2. The SMF of claim 1, wherein the first node is an application function (AF).

3. The SMF of claim 2, wherein the processor is configured to configure the PSA UPF to expose the data rate monitoring results to the AF via a Network Exposure Function (NEF).

4. The SMF of any preceding claim, wherein the request for data monitoring includes at least one of: (1) type of monitoring, (2) reporting levels, (3) reporting periodicity, (4) reporting stop timer.

5. The SMF of any preceding claim, wherein the type of monitoring includes at least one of uplink (UL) data rate monitoring, downlink (DL) data rate monitoring and UL and DL data rate monitoring.

6. A Next Generation Radio Access Network (NG-RAN) node of a network architecture, comprising:
a processor; and
a transceiver coupled to the processor,
wherein the processor is configured to:
receive, via the transceiver, session management information that includes a request for data rate monitoring from a Session Management Function (SMF);
determine at least one of: a predicted uplink (UL) data rate of a user equipment (UE) and a predicted downlink (DL) data rate of the UE; and
transmit, via the transceiver, data rate monitoring results to a User Plane Function PDU Session Anchor (PSA UPF), wherein the data rate monitoring results includes at least one of: the predicted UL data rate of the UE and the predicted DL data rate of the UE.

7. The NG-RAN node of claim 6, wherein the request for data monitoring includes at least one of: (1) type of monitoring, (2) reporting levels, (3) reporting periodicity, (4) reporting stop timer.

8. The NG-RAN node of claim 6 or 7, wherein the processor is configured to transmit the data rate monitoring results in an UL data packet or dummy UL packet.
